(19) Europäisches Patentamt
European Patent Office
Office européen des brevets

(11) **EP 3 967 006 B1**

(12) **FASCICULE DE BREVET EUROPEEN**

(45) Date de publication et mention
de la délivrance du brevet:
**31.05.2023 Bulletin 2023/22**

(21) Numéro de dépôt: **20721614.4**

(22) Date de dépôt: **30.04.2020**

(51) Classification Internationale des Brevets (IPC):
***H04W 40/10*** *(2009.01)* ***H04L 45/16*** *(2022.01)*

(52) Classification Coopérative des Brevets (CPC):
**H04W 40/24; H04L 45/16; H04W 40/10;
H04W 40/12; H04W 40/125; H04W 40/32;**
Y02D 30/70

(86) Numéro de dépôt international:
**PCT/EP2020/061990**

(87) Numéro de publication internationale:
**WO 2020/225075 (12.11.2020 Gazette 2020/46)**

(54) **PROCÉDÉ DE SÉLECTION DE PASSERELLES**

VERFAHREN ZUR AUSWAHL VON GATEWAYS

METHOD FOR SELECTING GATEWAYS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2019 FR 1904745**

(43) Date de publication de la demande:
**16.03.2022 Bulletin 2022/11**

(73) Titulaire: **Sagemcom Energy & Telecom SAS
92500 Rueil-Malmaison (FR)**

(72) Inventeur: **TEBOULLE, Henri
92500 RUEIL MALMAISON (FR)**

(74) Mandataire: **Cabinet Le Guen Maillet
3, impasse de la Vigie
CS 71840
35418 Saint-Malo Cedex (FR)**

(56) Documents cités:
**FR-A1- 3 044 198 FR-A1- 3 073 109**

• **QADIR QAHHAR MUHAMMAD ET AL: "Low
Power Wide Area Networks: A Survey of Enabling
Technologies, Applications and Interoperability
Needs", IEEE ACCESS, vol. 6, 31 décembre 2018
(2018-12-31), pages 77454-77473, XP011694524,
DOI: 10.1109/ACCESS.2018.2883151**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE

L'invention concerne un procédé de sélection de passerelles dans un ensemble de passerelles, pour relayer des données reçues d'un serveur et destinées à chaque terminal d'un groupe de terminaux, chaque terminal dudit groupe communiquant avec le serveur via au moins une passerelle de l'ensemble de passerelles, et un dispositif mettant en oeuvre ledit procédé.

ETAT DE LA TECHNIQUE ANTERIEURE

L'Internet se transforme progressivement en un réseau étendu, appelé « Internet des objets », reliant toutes sortes d'objets devenus connectables. De nouveaux besoins en termes de réseaux sont alors apparus, et notamment des besoins en réseaux sans fil ayant une plus grande couverture que des réseaux cellulaires classiques et permettant de limiter une consommation d'énergie des équipements connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa (marque déposée) (« Long Range » en terminologie anglo-saxonne). La technologie LoRa opère sur des bandes de fréquences connues sous l'appellation « Bande ISM » (Industrie, Science et Médical) comprenant des bandes de fréquences pouvant être utilisées librement pour des applications industrielles, scientifiques et médicales. La technologie LoRa est basée sur une technologie d'étalement de spectre permettant d'obtenir des communications bas débit ayant une bonne robustesse dans une bande ISM particulièrement bruitée. Un exemple se trouve dans FR 3073109.

Un réseau basé sur la technologie LoRa (appelé « réseau LoRa » par la suite) utilise un protocole appelé LoRaWAN (LoRaWAN 1.1 Spécification, final release, 11 octobre 2017). Un réseau LoRa est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des équipements ou terminaux (« endpoints » en terminologie anglo-saxonne) et de les remonter vers au moins un serveur (« LoRa Network Server (LNS) » en terminologie anglo-saxonne) qui les traitera ou les retransmettra à un ou plusieurs serveurs applicatifs. Dans un fonctionnement classique d'un réseau LoRa, un terminal désirant transmettre un message (i.e. des données) au serveur, transmet ce message dans une trame, dite trame montante, conforme au protocole LoRaWAN. La trame montante est transmise en mode multidiffusion (« broadcast » en terminologie anglo-saxonne). Cette trame montante est reçue par au moins une passerelle. Chaque passerelle ayant reçu la trame la décode et retransmet le message au serveur dans une requête HTTP (protocole de transfert hypertext, « HyperText Transfer Protocol » en terminologie anglo-saxonne). Si plusieurs passerelles ont reçu la trame, le serveur reçoit plusieurs requêtes HTTP contenant le message. Le serveur doit alors désigner parmi les passerelles ayant reçu la trame montante, la passerelle à utiliser pour relayer une réponse au message contenu dans la trame montante. La réponse est transmise du serveur à la passerelle désignée dans une requête HTTP, puis en point à point, de la passerelle désignée au terminal dans une trame descendante conforme au protocole LoRaWAN. Dans une majorité d'implémentations des réseaux LoRa, la passerelle désignée est celle offrant la qualité de transmission la meilleure avec le terminal ayant émis la trame montante.

Le protocole LoRaWAN définit trois classes de transmissions : les classes A, B et C. La classe A est la plus économique en termes de consommation énergétique. Lorsqu'un terminal a des données à envoyer, il le fait sans contrôle puis il ouvre deux fenêtres d'écoute successives pour des éventuels messages provenant du serveur. Ces deux fenêtres ont des durées recommandées de « 1 » puis « 2 » secondes. Ces deux fenêtres sont les seules durant lesquelles le serveur peut envoyer au terminal des données qu'il a précédemment stockées à son attention. La classe A doit être implémentée dans tous les terminaux par souci de compatibilité.

La classe B permet un bon compromis entre consommation énergétique et besoin en communication bidirectionnelle. Les terminaux fonctionnant en classe B ouvrent des fenêtres de réception à des intervalles programmés par des messages périodiques envoyés par le serveur.

La classe C a la plus forte consommation énergétique puisque les terminaux sont en permanence en écoute ce qui permet d'effectuer des communications à tous moments.

On note qu'un équipement peut changer de classe en cours de fonctionnement.

Récemment, une évolution du protocole LoRaWAN permettant à un serveur de transmettre des trames descendantes à un groupe de terminaux a été définie dans le document « LoRaWAN Remote Multicast Setup Spécification, final release, Version 1.0.0, 10 septembre 2018 ». Le groupe de terminaux forme alors un groupe multipoint (« multicast » en terminologie anglo-saxonne) et une trame transmise à un groupe multipoint est alors appelée trame multipoint (« multicast frame » en terminologie anglo-saxonne). Cette évolution du protocole LoRaWAN définit comment programmer une fenêtre de distribution multipoint pour un groupe multipoint de terminaux, comment faire en sorte que les terminaux dudit groupe passent temporairement en classe B ou en classe C au début de cette fenêtre, et comment fermer la fenêtre de distribution multipoint et revenir à un fonctionnement normal, par exemple en classe A.

Un problème sous-jacent à une transmission par un serveur d'une trame multipoint à des terminaux formant un groupe multipoint est que le serveur est susceptible de solliciter toutes les passerelles à portée des terminaux du groupe multipoint pour transmettre la trame multipoint. De ce fait, potentiellement, plusieurs passerelles pourront relayer la trame multipoint au même moment vers les terminaux du groupe multipoint. Il existe alors de forts risques de collisions entre les trames multipoint relayées et que ces collisions soient telles qu'elles provoquent des pertes de trames.

Il est souhaitable de pallier ces inconvénients de l'état de la technique. Il est notamment souhaitable de proposer une méthode réduisant le risque que des trames soient perdues suite à des collisions.

Il est par ailleurs souhaitable de proposer une méthode qui soit simple à mettre en oeuvre et à faible coût.

EXPOSE DE L'INVENTION

Selon un premier aspect de la présente invention, la présente invention concerne un procédé de sélection d'au moins une passerelle dans un ensemble de passerelles pour relayer des données reçues d'un serveur et destinées à chaque terminal d'un groupe de terminaux, chaque terminal dudit groupe communiquant avec le serveur via au moins une passerelle de l'ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau. Le procédé comprend une procédure de sélection comprenant : obtenir pour chaque couple formé d'un terminal dudit groupe et d'une passerelle de l'ensemble de passerelles possible, une information, dite information de qualité, représentative d'une qualité de communication entre ledit terminal et ladite passerelle ; rechercher au moins un sous-ensemble de passerelles de l'ensemble de passerelles qui, en combinaison, permettent au serveur de communiquer avec chaque terminal dudit groupe, chaque sous-ensemble comprenant un nombre de passerelles minimal, dit nombre minimal, nécessaire pour que le serveur puisse communiquer avec chaque terminal dudit groupe ; pour chaque sous-ensemble trouvé, obtenir, à partir des informations de qualité, une valeur d'une métrique représentative d'un risque que des données émises par le serveur et relayées par chaque passerelle dudit sous-ensemble soient perdues du fait de collisions entre des trames relayant lesdites données émises par les passerelles dudit sous-ensemble ; sélectionner un sous-ensemble en fonction des valeurs de métriques obtenues.

N'utiliser qu'un sous-ensemble de passerelles de l'ensemble de passerelles permet de réduire le risque de collision. Par ailleurs, utiliser une telle métrique permet de réduire le risque que des collisions provoquent des pertes de données.

Selon un mode de réalisation, si au moins une passerelle de l'ensemble de passerelles permet à elle seule au serveur de communiquer avec chaque terminal dudit groupe, le nombre minimal est égal à l'unité et pour chaque passerelle permettant au serveur de communiquer avec chaque terminal dudit groupe le procédé comprend : former un sous-ensemble contenant ladite passerelle ; et, associer ledit sous-ensemble à la valeur la plus faible parmi les valeurs des informations de qualité associées à la passerelle dudit sous-ensemble ; et, sélectionner le sous-ensemble associé à la valeur de qualité la plus élevée.

Selon un mode de réalisation, lorsque le nombre minimal est au moins égal à deux, pour chaque sous-ensemble, l'obtention de la métrique comprend : pour chaque terminal dudit groupe, pour chaque paire possible de passerelles dudit sous-ensemble, calculer une valeur absolue d'une différence, dite différence absolue, entre l'information de qualité associée audit terminal et à une première passerelle de la paire et l'information de qualité associée audit terminal et à une seconde passerelle de la paire ; et, associer ledit terminal à une valeur, dite différence absolue minimale, correspondant à la valeur minimale des différences absolues ainsi calculées; rechercher la valeur minimale des différences absolues minimales parmi les différences absolues minimales associées aux terminaux du groupe de terminaux ; et, fixer la valeur de la métrique associée audit sous-ensemble à la valeur minimale des différences absolues minimales trouvée ; le sous-ensemble associé à la valeur de la métrique la plus élevée étant sélectionné lorsque la valeur de la métrique est au moins égale à un seuil prédéfini.

Selon un mode de réalisation, la procédure de sélection est itérative et est réitérée tant qu'aucun sous ensemble n'est sélectionné, un sous-groupe de terminaux étant supprimé du groupe de terminaux de l'itération précédente à chaque nouvelle itération suivant la première itération.

Selon un mode de réalisation, chaque terminal du sous-groupe de terminaux est sélectionné parmi les terminaux du groupe de terminaux de l'itération précédente ayant les qualités de communication les plus mauvaises avec les passerelles de l'ensemble de passerelles.

Selon un mode de réalisation, le réseau sans fil à grande portée et permettant une faible consommation d'énergie est un réseau LoRa et le protocole de communication adapté audit réseau est le protocole LoRaWAN.

Selon un deuxième aspect de l'invention, l'invention concerne un procédé de transmission de données d'un serveur vers un groupe de terminaux, chaque terminal dudit groupe communiquant avec le serveur via au moins une passerelle d'un ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau. Le procédé comprend : obtenir des données à transmettre à un groupe de terminaux ; obtenir un sous-ensemble de passerelles de l'ensemble de passerelles pour relayer lesdites données au groupe de terminaux, ledit sous-ensemble étant obtenu en exécutant le procédé selon le premier aspect ; et, transmettre lesdites données aux terminaux du groupes de terminaux via chaque passerelle du sous-ensemble de passerelles.

Selon un troisième aspect de l'invention, l'invention concerne un dispositif de sélection d'au moins une passerelle dans un ensemble de passerelles pour relayer des données reçues d'un serveur et destinées à chaque terminal d'un groupe de terminaux, chaque terminal dudit groupe communiquant avec le serveur via au moins une passerelle d'un ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau. Le dispositif comprend: des moyens d'obtention pour obtenir pour chaque couple formé d'un terminal dudit groupe et d'une passerelle de l'ensemble de passerelles possible, une information, dite information de qualité, représentative d'une qualité de communication entre ledit terminal et ladite passerelle ; des moyens de recherche pour rechercher au moins un sous-ensemble de passerelles de l'ensemble de passerelles qui, en combinaison, permettent au serveur de communiquer avec chaque terminal dudit groupe, chaque sous-ensemble comprenant un nombre de passerelles minimal, dit nombre minimal, nécessaire pour que le serveur puisse communiquer avec chaque terminal dudit groupe ; des moyens d'obtention pour obtenir à partir des informations de qualité, pour chaque sous-ensemble trouvé, une valeur d'une métrique représentative d'un risque que des données émises par le serveur et relayées par chaque passerelle dudit sous-ensemble soient perdues du fait de collisions entre des trames relayant lesdites données émises par les passerelles dudit sous-ensemble ; des moyens de détermination pour déterminer le sous-ensemble associé à la valeur de métrique la plus élevée ; et, des moyens de sélection pour sélectionner le sous-ensemble déterminé si la valeur de la métrique la plus élevée est au moins égale à un seuil prédéfini.

Selon un quatrième aspect de l'invention, l'invention concerne un équipement de type serveur adapté pour communiquer avec un groupe de terminaux via un ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau. L'équipement comprend : des moyens d'obtention pour obtenir des données à transmettre au groupe de terminaux ; un dispositif de sélection d'au moins une passerelle dans l'ensemble de passerelles selon le troisième aspect ; et, des moyens de transmission pour transmettre lesdites données aux terminaux du groupe de terminaux via chaque passerelle sélectionnée.

Selon un cinquième aspect de l'invention, l'invention concerne un programme d'ordinateur comprenant des instructions pour mettre en oeuvre, par un dispositif, le procédé selon le premier aspect, lorsque ledit programme est exécuté par un processeur dudit dispositif. Selon un sixième aspect, l'invention concerne des moyens de stockage stockant un programme d'ordinateur comprenant des instructions pour mettre en oeuvre, par un dispositif, le procédé selon le premier aspect, lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un réseau LoRa dans lequel est mise en oeuvre l'invention ;
[Fig. 2] illustre schématiquement un module de traitement ;
[Fig. 3] illustre schématiquement un procédé de transmission par un serveur de trames multipoints à destination d'un groupe multipoint de terminaux ;
[Fig. 4] illustre schématiquement une représentation haut niveau d'un procédé de sélection d'au moins une passerelle pour relayer une trame multipoint ; et,
[Fig. 5] illustre schématiquement un exemple de procédé de sélection d'au moins une passerelle pour relayer une trame multipoint.

EXPOSE DETAILLE DE MODES DE REALISATION

L'invention est décrite par la suite dans un contexte de réseau LoRa dans lequel un serveur transmet une ou plusieurs trames à un groupe multipoint de terminaux. L'invention s'applique toutefois dans d'autres contextes pour tous types de réseaux sans fil à grande portée et permettant une faible consommation d'énergie dans lesquels un serveur transmet une ou plusieurs trames à un groupe de terminaux, la ou lesdites trames pouvant être relayée(s) par une pluralité de passerelles.

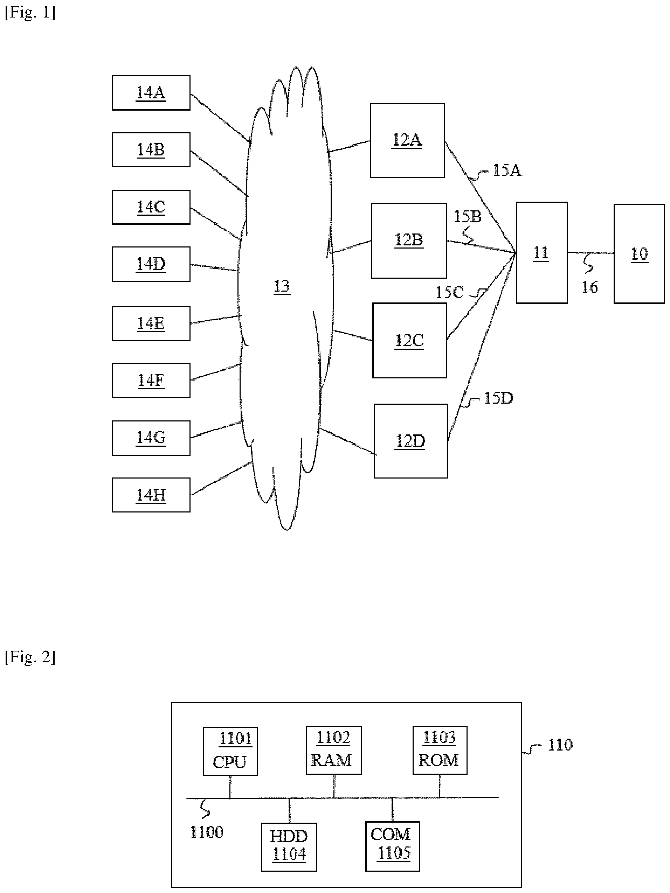

La **Fig. 1** illustre schématiquement un réseau LoRa dans lequel est mise en oeuvre l'invention.

Dans l'exemple de la Fig. 1, le réseau LoRa comprend un ensemble de passerelles 12A, 12B, 12C et 12D et un ensemble de terminaux comprenant une pluralité de terminaux 14A, 14B, 14C, 14D, 14E, 14F, 14G et 14H. Chaque passerelle communique avec un serveur 11, dit serveur LNS, par l'intermédiaire d'un lien de communication filaire ou sans fil. Par exemple, la passerelle 12A (respectivement la passerelle 12B, 12C et 12D) communique avec le serveur LNS 11 par l'intermédiaire d'un lien de communication filaire ou sans fil 15A (respectivement 15B, 15C et 15D).

Chaque communication entre une passerelle et un terminal utilise un lien de communication sans fil 13. On note que les communications sur le lien de communication sans fil 13 sont conformes au protocole Lo-RaWAN.

Le serveur LNS 11 est connecté à un ou plusieurs serveurs 10, dits serveurs applicatifs, par l'intermédiaire d'un lien de communication filaire ou sans fil 16.

Dans l'exemple de la Fig. 1, la pluralité de terminaux 14A, 14B, 14C, 14D, 14E, 14F, 14G et 14H forme un groupe multipoint. Ce groupe multipoint a par exemple été défini par le serveur applicatif 10. On note que pour simplifier la Fig. 1, le groupe multipoint ne comprend que « 8 » terminaux. Dans un cas pratique, ce groupe multipoint pourrait être composé d'un grand nombre de terminaux. Par exemple, le groupe multipoint pourrait comprendre « 256 », « 512 » ou « 1024 » terminaux. De même, dans la Fig. 1, nous avons représenté un ensemble de passerelles comprenant « 4 » passerelles. Dans un cas pratique, le nombre de passerelles pourrait être plus important. L'ensemble de passerelles pourrait comprendre une centaine de passerelles.

La **Fig. 2** illustre schématiquement un exemple d'architecture matérielle du module de traitement 110 compris dans le serveur LNS 11.

Selon l'exemple d'architecture matérielle représenté à la Fig. 2, le module de traitement 110 comprend alors, reliés par un bus de communication 1100 : un processeur ou CPU (« Central Processing Unit» en terminologie anglo-saxonne) 1101 ; une mémoire vive RAM (« Random Access Memory » en terminologie anglo-saxonne) 1102 ; une mémoire morte ROM (« Read Only Memory » en terminologie anglo-saxonne) 1103 ; une unité de stockage telle qu'un disque dur ou un lecteur de support de stockage, tel qu'un lecteur de cartes SD (« Secure Digital » en terminologie anglo-saxonne) 1104 ; au moins une interface de communication 1105 permettant au module de traitement 110 de communiquer avec d'autres dispositifs tels que les passerelles 12A, 12B, 12C et 12D et le serveur applicatif 10.

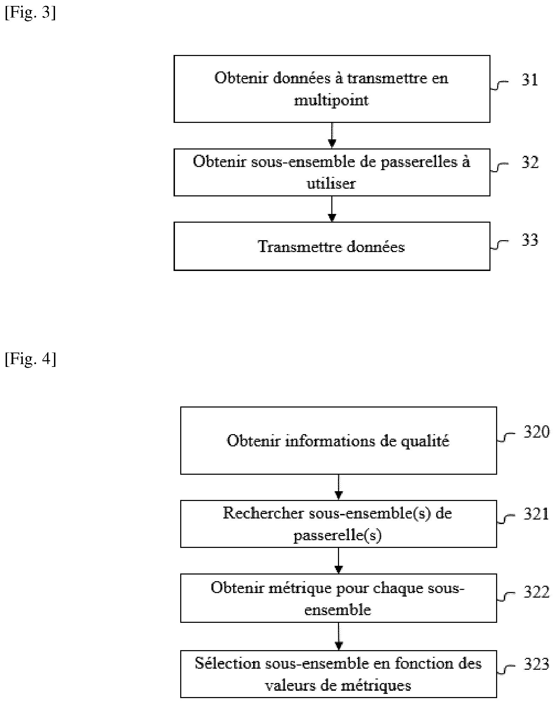

Le processeur 1101 est capable d'exécuter des instructions chargées dans la RAM 1102 à partir de la ROM 1103, d'une mémoire externe (non représentée), d'un support de stockage (tel qu'une carte SD), ou d'un réseau de communication. Lorsque le serveur LNS 11 est mis sous tension, le processeur 1101 est capable de lire de la RAM 1102 des instructions et de les exécuter. Dans un mode de réalisation, ces instructions forment un programme d'ordinateur causant la mise en oeuvre complète ou partielle, par le processeur 1101, des procédés décrits ci-après en relation avec les Figs. 3, 4 et 5.

La **Fig. 3** illustre schématiquement un procédé de transmission par un serveur de trames multipoints à destination d'un groupe multipoint de terminaux.

Dans une étape 31, le module de traitement 110 du serveur LNS 11 reçoit des données à transmettre au groupe multipoint formé par les terminaux 14A, 14B, 14C, 14D, 14E, 14F, 14G et 14H.

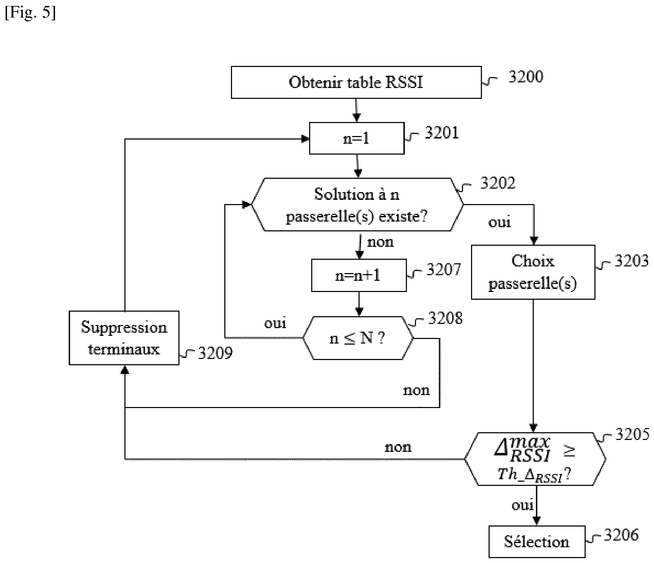

Dans une étape 32, le module de traitement 110 obtient un sous-ensemble de passerelles de l'ensemble de passerelles pour relayer lesdites données au groupe multipoint de terminaux. Ledit sous-ensemble est obtenu en exécutant un procédé de sélection décrit par la suite en relation avec la Fig. 4. Une version plus détaillée de ce procédé est décrite par la suite en relation avec la Fig. 5.

Dans une étape 33, le module de traitement 110 transmet lesdites données aux terminaux du groupe de terminaux via chaque passerelle du sous-ensemble de passerelles. Chaque passerelle recevant ces données forme et transmet alors une ou plusieurs trames multipoints conformes au protocole LoRaWAN destinées aux terminaux du groupe multipoint. En réduisant le nombre de passerelles utilisées pour relayer les données, *i.e.* en n'utilisant pas toutes les passerelles de l'ensemble de passerelles, on réduit le risque que des collisions provoquent des pertes des trames multipoints transportant ces données. On considère que lors de l'étape 33, les terminaux du groupe multipoint de terminaux qui fonctionnaient en classe A passent temporairement en classe B ou en classe C en exécutant des procédés définis dans le protocole LoRaWAN.

La Fig. 4 illustre schématiquement une représentation haut niveau d'un procédé de sélection d'au moins une passerelle pour relayer une trame multipoint.

Dans un mode de réalisation, ce procédé est exécuté par le module de traitement 110 du serveur LNS 11. Il pourrait toutefois être exécuté par d'autres serveurs connectés au serveur LNS 11, ces serveurs fournissant un résultat de l'exécution de ce procédé au serveur LNS 11. Par ailleurs, dans un mode de réalisation, ce procédé est exécuté lors de l'étape 32. Il pourrait toutefois être exécuté à un autre moment, préalablement à l'exécution de l'étape 31, l'étape 32 ne consistant qu'à obtenir le résultat d'exécution dudit procédé.

Dans une étape 320, pour chaque couple formé d'un terminal du groupe multipoint et d'une passerelle de l'ensemble de passerelles possible, une information *IQ,* dite information de qualité, représentative d'une qualité de communication entre ledit terminal et ladite passerelle est obtenue par le module de traitement 110. Dans un mode de réalisation, pour chaque couple formé d'un terminal du groupe multipoint et d'une passerelle de l'ensemble de passerelles, l'information de qualité *IQ* est une valeur représentative d'un RSSI (indication de la force du signal reçu, « Received Signal Strength Indication » en terminologie anglo-saxonne) mesurée par ladite passerelle lorsqu'elle reçoit une trame montante conforme au protocole LoRaWAN, dite trame LoRa montante, dudit terminal. Par exemple, l'information de qualité *IQ* est la valeur de RSSI mesurée lors de la réception de la dernière trame LoRa montante ou une moyenne de valeurs de RSSI. Dans un mode de réalisation, les informations de qualité *IQ* sont représentées dans un tableau *TAB* à deux dimensions. Une première dimension dudit tableau *TAB* représente les terminaux du groupe multipoint de terminaux. Une seconde dimension représente les passerelles de l'ensemble de passerelles. Lorsqu'une passerelle n'a jamais reçu de trame d'un terminal, par exemple, lorsque ladite passerelle n'est pas à portée dudit terminal, l'information de qualité *IQ* correspondant au couple formé de cette passerelle et de ce terminal est initialisée à une valeur prédéfinie *IQ_MIN,* par exemple égale à -1000dBm.

Dans une étape 321, le module de traitement 110 recherche au moins un sous-ensemble de passerelles de l'ensemble de passerelles qui, en combinaison, permettent au serveur LNS 11 de communiquer avec chaque terminal du groupe multipoint de terminaux. Chaque sous-ensemble comprend un nombre de passerelles minimal *N_MIN,* dit nombre minimal, nécessaire pour que le serveur puisse communiquer avec chaque terminal dudit groupe. C'est-à-dire que le nombre minimal *N_MIN* est le plus petit possible, le nombre minimal *N_MIN* étant au moins égal à « 1 ». Lorsqu'un sous-ensemble de passerelles comprend un nombre minimal *N_MIN* de passerelles supérieur à « 1 », aucune passerelle dudit sous-ensemble ne permet à elle seule au serveur LNS 11 de communiquer avec chaque terminal du groupe multipoint de terminaux. Par contre, pour chaque terminal du groupe multipoint de terminaux, le serveur LNS 11 est certain de trouver parmi les *N_MIN* passerelles du sous-ensemble de passerelles au moins une passerelle permettant de communiquer avec ledit terminal.

Dans une étape 322, pour chaque sous-ensemble trouvé, le module de traitement 110 obtient, à partir des informations de qualité *IQ,* une valeur d'une métrique $\Delta_{RSSI}$ représentative d'un risque que des données émises par le serveur LNS 11 et relayées par chaque passerelle du sous-ensemble de passerelles soient perdues du fait de collisions entre des trames relayant lesdites données émises par les passerelles dudit sous-ensemble de passerelles. Nous décrivons un exemple de métrique $\Delta_{RSSI}$ par la suite en relation avec la Fig. 5.

Dans une étape 323, le module de traitement 110 sélectionne un sous-ensemble en fonction des valeurs de métriques. Lors de cette sélection, par exemple, le module de traitement 110 détermine le sous-ensemble associé à la valeur de métrique la plus élevée, notée $\Delta_{RSSI}^{max}$, et sélectionne le sous-ensemble déterminé si la valeur de la métrique la plus élevée $\Delta_{RSSI}^{max}$ est au moins égale à un seuil prédéfini $Th\_\Delta_{RSSI}$. Dans un mode de réalisation, $Th\_\Delta_{RSSI}$ = 5dB. La **Fig. 5** illustre schématiquement un exemple de procédé de sélection d'au moins une passerelle pour relayer une trame multipoint.

Le procédé de la Fig. 5 est un exemple de mise en oeuvre pratique et détaillée du procédé décrit en relation avec la Fig. 4.

Dans une étape 3200 correspondant à l'étape 320, le module de traitement 110 obtient un tableau *TAB* comprenant pour chaque couple formé d'un terminal du groupe multipoint de terminaux et d'une passerelle de l'ensemble de passerelle, une information de qualité *IQ.* Dans une étape 3201, le module de traitement 110 initialise une variable *n* à l'unité. La variable *n* permet de rechercher la valeur du nombre minimal *N_MIN.*

Dans une étape 3202, le module de traitement 110 détermine s'il existe un sous-ensemble de l'ensemble de passerelles comprenant *n* passerelles qui, en combinaison, permettent au serveur de communiquer avec chaque terminal du groupe multipoint de terminaux. Lorsque *n*=1, le module de traitement 110 recherche au moins une passerelle dans l'ensemble de passerelles qui à elle seule permet au serveur LNS 11 de communiquer avec chaque terminal du groupe multipoint de terminaux.

S'il n'existe pas de sous-ensemble de passerelles comprenant n passerelles qui, en combinaison, permettent au serveur de communiquer avec chaque terminal du groupe multipoint de terminaux, dans une étape 3207, la variable *n* est incrémentée d'une unité. Ainsi le module de traitement 110 augmente la taille des sous-ensembles de passerelles. Dans une étape 3208, le module de traitement 110 compare la variable *n* à un nombre prédéfini *N* représentant une taille maximum des sous-ensembles. Si $n \leq N,$ le module de traitement 110 retourne à l'étape 3202. Sinon, l'étape 3208 est suivie d'une étape 3209.

Si au moins un sous-ensemble de passerelles comprenant *n* passerelles qui, en combinaison, permettent au serveur de communiquer avec chaque terminal du groupe multipoint de terminaux existe, l'étape 3202 est suivie d'une étape 3203.

Lorsque *n*=1, lors de l'étape 3202, le module de traitement 110 a formé un sous-ensemble comprenant une passerelle à partir de chaque passerelle permettant à elle seule au serveur LNS 11 de communiquer avec chaque terminal du groupe multipoint de terminaux.

Lors de l'étape 3203, pour chaque sous-ensemble d'une passerelle ainsi formé, le module de traitement 110 associe ledit sous-ensemble à une valeur *IQ_min* correspondant à la valeur la plus faible parmi les valeurs des informations de qualité *IQ* associées à la passerelle contenue dans ledit sous-ensemble. Le module de traitement 110 choisit ensuite le sous-ensemble associé à la valeur *IQ_min* la plus élevée et fixe la valeur de la

métrique $\Delta_{RSSI}^{max}$ à la valeur du seuil prédéfini $Th\_\Delta_{RSSI}$ ( $\Delta_{RSSI}^{max} = Th\_\Delta_{RSSI}$ ).

Dans une étape 3205, le module de traitement 110 compare la valeur de la métrique $\Delta_{RSSI}^{max}$ au seuil prédéfini $Th\_\Delta_{RSSI}$. Si $\Delta_{RSSI}^{max} \geq Th\_\Delta_{RSSI}$, le module de traitement 110 exécute une étape 3206 au cours de laquelle il sélectionne le sous-ensemble de passerelles choisi lors de l'étape 3203. Or, puisque lorsque *n*=1, $\Delta_{RSSI}^{max} = Th\_\Delta_{RSSI}$, le sous-ensemble choisi lors de l'étape 3203, c'est-à-dire le sous-ensemble associé à la valeur *IQ_min* la plus élevée, est nécessairement sélectionné.

Lorsque *n*>1, lors de l'étape 3202, (*i.e.* aucun sous-ensemble comprenant une seule passerelle existe) le module de traitement 110 a formé un sous-ensemble comprenant *n* passerelles à partir de chaque combinaison de *n* passerelles de l'ensemble de passerelles permettant au serveur LNS 11 de communiquer avec chaque terminal du groupe multipoint de terminaux.

Lors de l'étape 3203, pour chaque sous-ensemble ainsi formé, le module de traitement 110 calcule pour chaque terminal d'indice *i* du groupe multipoint de terminaux et pour chaque paire possible de passerelles dudit sous-ensemble, ladite paire étant constituée d'une passerelle d'indice *k* et une passerelle d'indice *l*, une valeur absolue d'une différence $DA_{i,k,l}$, dite différence absolue, entre une information de qualité $IQ_{i,k}$ associée au terminal d'indice *i* et à la passerelle d'indice *k* et une information de qualité $IQ_{i,l}$ associée au terminal d'indice *i* et à la passerelle d'indice *l* :

$$DA_{i,k,l} = \left| IQ_{i,k} - IQ_{i,l} \right|$$

Suite au calcul des différences absolues $DA_{i,k,l}$ pour chaque sous-ensemble ainsi formé, le module de traitement 110 détermine pour chaque terminal d'indice *i,* la valeur minimale des différences absolues $DA_{i,k,l}$ ainsi calculées, dite différence absolue minimale $DA_i^{min}$.

$$DA_i^{min} = min_i^{\forall k, \forall l, k \neq l}(DA_{i,k,l})$$

où $min_i^{\forall k, \forall l, k \neq l}(x_{i,k,l})$ est une fonction donnant une valeur minimale des $x_{i,k,l}$ parmi toutes les valeurs possibles de $x_{i,k,l}$ d'indice *i* fixé et d'indices *k* et *l* (*k* ≠ *l*) variables et pris dans l'ensemble des valeurs possibles des indices *k* et *l* dans le sous-ensemble concerné. Lorsque *n*=2, c'est-à-dire lorsque chaque sous-ensemble comprend deux passerelles, pour chaque sous-ensemble et chaque terminal, le module de traitement 110 ne calcule qu'une différence $DA_{i,k,l}$. Dans ce cas, la différence absolue minimale $DA_i^{min} = DA_{i,k,l}$.

On obtient alors, pour chaque sous-ensemble, un ensemble de valeurs absolues minimales $DA_i^{min}$, chaque terminal du groupe multipoint de terminaux étant associé à une valeur absolue minimale $DA_i^{min}$ pour ledit sous-ensemble.

Suite à la détermination des différences absolues minimales $DA_i^{min}$, pour chaque sous-ensemble ainsi formé, le module de traitement 110 recherche la valeur minimale des différences absolues minimales parmi les différences absolues minimales associées aux terminaux du groupe de terminaux.

Pour chaque sous-ensemble, le module de traitement 110 fixe la valeur de la métrique $\Delta_{RSSI}$ associée audit sous-ensemble à la valeur minimale des différences absolues minimales trouvée.

$$\Delta_{RSSI} = min^{\forall i}(DA_i^{min})$$

où $min^{\forall i}(x_i)$ est une fonction donnant une valeur minimale des $x_i$ parmi toutes les valeurs possibles de $x_i$ d'indice *i* variable et pris dans l'ensemble des valeurs de *i* possibles. L'ensemble des valeurs possibles de l'indice *i* est l'ensemble des valeurs d'indice *i* des terminaux du groupe multipoint de terminaux.

Lors de l'étape 3203, le module de traitement choisit, parmi tous les sous-ensembles, le sous-ensemble associé à la valeur de la métrique $\Delta_{RSSI}^{max}$ correspondant à la valeur de la métrique $\Delta_{RSSI}$ la plus élevée.

Lors de l'étape 3205, le module de traitement 110 compare la valeur de la métrique $\Delta_{RSSI}^{max}$ au seuil prédéfini $Th\_\Delta_{RSSI}$. Si $\Delta_{RSSI}^{max} \geq Th\_\Delta_{RSSI}$, le module de traitement 110 exécute l'étape 3206 au cours de laquelle il sélectionne le sous-ensemble de passerelle choisi lors de l'étape 3203. Sinon, le module de traitement 110 exécute l'étape 3209.

Lors de l'étape 3209, le module de traitement 110 supprime un sous-groupe de terminaux du groupe multipoint de terminaux. Dans un mode de réalisation, le sous-groupe de terminaux comprend un nombre prédéfini de terminaux et les terminaux du sous-groupe de terminaux sont choisis aléatoirement parmi les terminaux du groupe multipoint de terminaux. Dans un autre mode de réalisation, le sous-groupe de terminaux comprend un nombre prédéfini de terminaux et les terminaux du sous-groupe de terminaux sont les terminaux du groupe multipoint de terminaux ayant les qualités de communication moyennes les plus mauvaises avec les passerelles de l'ensemble de passerelles. Dans un autre mode de réalisation, le sous-groupe de terminaux comprend un nombre prédéfini de terminaux et les terminaux du sous-groupe de terminaux sont les terminaux du groupe multipoint de terminaux associés aux valeurs $DA_i^{min}$ calculées lors de l'étape 3203 les plus faibles.

L'étape 3209 est suivie de l'étape 3201 déjà expliquée.

Le procédé de sélection de la Fig. 5 est donc itératif et est réitéré tant qu'aucun sous ensemble de passerelles n'est sélectionné.

Dans un mode de réalisation, le nombre prédéfini $N$ est fixé afin de limiter une complexité de calcul des valeurs de métrique $\Delta_{RSSI}$. En effet, plus la valeur de $n$ est élevée, plus le nombre de paires de passerelles possibles dans un sous-ensemble de passerelles de taille $n$ est élevé et donc plus le calcul des valeurs de métrique $\Delta_{RSSI}$ devient complexe. Dans un mode de réalisation, le nombre prédéfini N est fixé à « 4 ».

Dans le mode de réalisation de la Fig. 5 décrit jusque-là, on considère que la suppression d'un sous-groupe de passerelles peut permettre d'aboutir à une sélection d'un sous-ensemble constitué d'une passerelle (*i.e. n*=1). Pour cette raison, l'étape 3209 est suivie de l'étape 3201 au cours de laquelle le module de traitement 110 reprend le procédé avec *n*=1.

Dans un autre mode de réalisation, suite à l'étape 3209, le module de traitement 110 reprend, lors de l'étape 3201, à la dernière valeur de $n$ testée. Dans ce mode de réalisation, on considère que si on a atteint la valeur de $n$ courante, c'est qu'il n'existe pas de solution avec une valeur de $n$ inférieure à la valeur de $n$ courante, même en supprimant des terminaux du groupe multipoint de terminaux. Ainsi, par exemple, si le module de traitement 110 exécute l'étape 3209 alors que la valeur de $n$ est égale à deux, il reprend l'étape 3201 avec une valeur de $n$ égale à deux.

Dans un mode de réalisation, chaque valeur de $n$ supérieure à l'unité est associée à un pourcentage maximal prédéfini de terminaux supprimés dans le groupe multipoint de terminaux lors de l'étape 3209. Ainsi, même si lors de l'exécution de l'étape 3202, on sait qu'il existe des sous-ensembles de $n$ passerelles permettant en combinaison au serveur de communiquer avec chaque terminal du groupe multipoint de terminaux, si le pourcentage de terminaux supprimés du groupe multipoint de terminaux est supérieur au pourcentage maximal prédéfini associé à la valeur de n, alors le module de traitement 110 considère qu'il n'existe aucun sous-ensemble de $n$ passerelles possible. Par exemple, si le nombre prédéfini N est égal à « 4 », la valeur n=2 est associée au pourcentage maximal prédéfini « 25% », la valeur n=3 est associée au pourcentage maximal prédéfini « 50% » et la valeur n=4 est associée au pourcentage maximal prédéfini « 100% ». Par exemple, si lors d'une exécution de l'étape 3209, on obtient un pourcentage de terminaux supprimés du groupe multipoint de terminaux supérieur à « 25% » alors que la valeur courante de $n$ est égale à deux, lors de l'étape 3201 suivant cette étape 3209, le module de traitement 110 fixe la valeur de $n$ à trois.

**Revendications**

**1.** Procédé de sélection d'au moins une passerelle dans un ensemble de passerelles (12A, 12B, 12C, 12D) pour relayer des données reçues d'un serveur et destinées à chaque terminal d'un groupe de terminaux (14A, 14B, 14C, 14D, 14E, 14F, 14G, 14H), chaque terminal dudit groupe communiquant avec le serveur via au moins une passerelle de l'ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau, **caractérisé en ce que** le procédé comprend une procédure de sélection comprenant :

    - obtenir (320) pour chaque couple formé d'un terminal dudit groupe et d'une passerelle de l'ensemble de passerelles possible, une information, dite information de qualité, représentative d'une qualité de communication entre ledit terminal et ladite passerelle ;
    - rechercher (321) au moins un sous-ensemble de passerelles de l'ensemble de passerelles qui, en combinaison, permettent au serveur de communiquer avec chaque terminal dudit groupe, chaque sous-ensemble comprenant un nombre de passerelles minimal, dit nombre minimal, nécessaire pour que le serveur puisse communiquer avec chaque terminal dudit groupe ;
    - pour chaque sous-ensemble trouvé, obtenir (322), à partir des informations de qualité, une valeur d'une métrique représentative d'un risque que des données émises par le serveur et relayées par chaque passerelle dudit sous-ensemble soient perdues du fait de collisions entre des trames relayant lesdites données émises par les passerelles dudit sous-ensemble ; et,
    - sélectionner (323) un sous-ensemble en fonction des valeurs de métriques obtenues.

**2.** Procédé selon la revendication 1, comprenant que si au moins une passerelle de l'ensemble de passerelles permet à elle seule au serveur de communiquer avec chaque terminal dudit groupe, le nombre minimal est égal à l'unité et pour chaque passerelle permettant au serveur de communiquer avec chaque terminal dudit groupe le procédé comprend :

- former un sous-ensemble contenant ladite passerelle ; et,
- associer ledit sous-ensemble à la valeur la plus faible parmi les valeurs des informations de qualité associées à la passerelle dudit sous-ensemble ; et,
- sélectionner le sous-ensemble associé à la valeur de qualité la plus élevée.

3. Procédé selon la revendication 1 ou 2, comprenant que lorsque le nombre minimal est au moins égal à deux, pour chaque sous-ensemble, l'obtention de la métrique comprend :

- pour chaque terminal dudit groupe : pour chaque paire possible de passerelles dudit sous-ensemble, calculer une valeur absolue d'une différence, dite différence absolue, entre l'information de qualité associée audit terminal et à une première passerelle de la paire et l'information de qualité associée audit terminal et à une seconde passerelle de la paire ; et, associer ledit terminal à une valeur, dite différence absolue minimale, correspondant à la valeur minimale des différences absolues ainsi calculées ;
- rechercher la valeur minimale des différences absolues minimales parmi les différences absolues minimales associées aux terminaux du groupe de terminaux ; et,
- fixer la valeur de la métrique associée audit sous-ensemble à la valeur minimale des différences absolues minimales trouvée ;

le sous-ensemble associé à la valeur de la métrique la plus élevée étant sélectionné lorsque la valeur de la métrique est au moins égale à un seuil prédéfini.

4. Procédé selon l'une quelconque des revendications précédentes, comprenant que la procédure de sélection est itérative et est réitérée tant qu'aucun sous ensemble n'est sélectionné, un sous-groupe de terminaux étant supprimé du groupe de terminaux de l'itération précédente à chaque nouvelle itération suivant la première itération.

5. Procédé selon la revendication 4, comprenant que chaque terminal du sous-groupe de terminaux est sélectionné parmi les terminaux du groupe de terminaux de l'itération précédente ayant les qualités de communication les plus mauvaises avec les passerelles de l'ensemble de passerelles.

6. Procédé selon l'une quelconque des revendications précédentes, comprenant que le réseau sans fil à grande portée et permettant une faible consommation d'énergie est un réseau LoRa et le protocole de communication adapté audit réseau est le protocole LoRaWAN.

7. Procédé de transmission de données d'un serveur vers un groupe de terminaux, chaque terminal dudit groupe communiquant avec le serveur via au moins une passerelle d'un ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau, le procédé comprend:

- obtenir (31) des données à transmettre à un groupe de terminaux ;
- obtenir (32) un sous-ensemble de passerelles de l'ensemble de passerelles pour relayer lesdites données au groupe de terminaux, ledit sous-ensemble étant obtenu en exécutant le procédé selon l'une quelconque des revendications 1 à 6 ; et,
- transmettre (33) lesdites données aux terminaux du groupe de terminaux via chaque passerelle du sous-ensemble de passerelles.

8. Dispositif de sélection d'au moins une passerelle dans un ensemble de passerelles (12A, 12B, 12C, 12D) pour relayer des données reçues d'un serveur et destinées à chaque terminal d'un groupe de terminaux (14A, 14B, 14C, 14D, 14E, 14F, 14G, 14H), chaque terminal dudit groupe communiquant avec le serveur via au moins une passerelle d'un ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau, **caractérisé en ce que** le dispositif comprend:

- des moyens d'obtention pour obtenir pour chaque couple formé d'un terminal dudit groupe et d'une passerelle de l'ensemble de passerelles possible, une information, dite information de qualité, représentative d'une qualité de communication entre ledit terminal et ladite passerelle ;
- des moyens de recherche pour rechercher au moins un sous-ensemble de passerelles de l'ensemble de passerelles qui, en combinaison, permettent au serveur de communiquer avec chaque terminal dudit groupe, chaque sous-ensemble comprenant un nombre de passerelles minimal, dit nombre minimal, nécessaire pour que le serveur puisse communiquer avec chaque terminal dudit groupe ;

- des moyens de détermination pour déterminer le sous-ensemble associé à la valeur de métrique la plus élevée ; et,

- des moyens de sélection pour sélectionner le sous-ensemble déterminé si la valeur de la métrique la plus élevée est au moins égale à un seuil prédéfini.

9. Equipement de type serveur adapté pour communiquer avec un groupe de terminaux via un ensemble de passerelles, le groupe de terminaux et l'ensemble de passerelles formant un réseau sans fil à grande portée et permettant une faible consommation d'énergie, chaque passerelle recevant des données destinées à au moins un terminal retransmettant lesdites données à chaque terminal auquel lesdites données sont destinées dans une trame conforme à un protocole de communication adapté audit réseau, l'équipement comprend :

- des moyens d'obtention pour obtenir des données à transmettre au groupe de terminaux ;

- un dispositif de sélection d'au moins une passerelle dans l'ensemble de passerelles selon la revendication 8 ; et,

- des moyens de transmission pour transmettre lesdites données aux terminaux du groupe de terminaux via chaque passerelle sélectionnée.

10. Programme d'ordinateur, comprenant des instructions pour mettre en oeuvre, par un dispositif (110), le procédé selon l'une quelconque des revendications 1 à 7, lorsque ledit programme est exécuté par un processeur dudit dispositif.

11. Moyens de stockage, comprenant le stockage d'un programme d'ordinateur comprenant des instructions pour mettre en oeuvre, par un dispositif (110), le procédé selon l'une quelconque des revendications 1 à 7, lorsque ledit programme est exécuté par un processeur dudit dispositif.

**Patentansprüche**

1. Verfahren zur Auswahl mindestens eines Gateways in einer Einheit von Gateways (12A, 12B, 12C, 12D), um von einem Server empfangene und für jedes Endgerät einer Gruppe von Endgeräten (14A, 14B, 14C, 14D, 14E, 14F, 14G, 14H) bestimmte Daten weiterzuleiten, wobei jedes Endgerät der Gruppe mit dem Server über mindestens ein Gateway der Einheit von Gateways kommuniziert, wobei die Gruppe von Endgeräten und die Einheit von Gateways ein drahtloses Weitverkehrsnetz bilden und einen geringen Energieverbrauch erlauben, wobei jedes für mindestens ein Endgerät bestimmte Daten empfangende Gateway die Daten in einem Rahmen entsprechend einem für das Netz geeigneten Kommunikationsprotokoll an jedes Endgerät überträgt, für das die Daten bestimmt sind, **dadurch gekennzeichnet, dass** das Verfahren eine Auswahlprozedur enthält, die enthält:

- für jedes von einem Endgerät der Gruppe und einem möglichen Gateway der Einheit von Gateways gebildete Paar eine Information, Qualitätsinformation genannt, zu erhalten (320), die für eine Kommunikationsqualität zwischen dem Endgerät und dem Gateway repräsentativ ist;

- mindestens eine Teileinheit von Gateways der Einheit von Gateways zu suchen (321), die in Kombination dem Server erlauben, mit jedem Endgerät der Gruppe zu kommunizieren, wobei jede Teileinheit eine minimale Anzahl von Gateways enthält, minimale Anzahl genannt, die notwendig ist, damit der Server mit jedem Endgerät der Gruppe kommunizieren kann;

- für jede gefundene Teileinheit ausgehend von den Qualitätsinformationen einen Wert einer Metrik zu erhalten (322), die für eine Gefahr repräsentativ ist, dass vom Server gesendete und von jedem Gateway der Teileinheit weitergeleitete Daten aufgrund von Kollisionen zwischen Rahmen verlorengehen, die die von den Gateways der Teileinheit gesendeten Daten weiterleiten; und

- eine Teileinheit abhängig von den Werten von erhaltenen Metriken auszuwählen (323).

2. Verfahren nach Anspruch 1, das enthält, dass, wenn mindestens ein Gateway der Einheit von Gateways alleine dem Server erlaubt, mit jedem Endgerät der Gruppe zu kommunizieren, die minimale Anzahl gleich eins ist, und für jedes Gateway, das dem Server erlaubt, mit jedem Endgerät der Gruppe zu kommunizieren, das Verfahren enthält:

- eine das Gateway enthaltende Teileinheit zu bilden; und

- die Teileinheit dem geringsten Wert unter den Werten der dem Gateway der Teileinheit zugeordneten Qualitätsinformationen zuzuordnen; und

- die dem höchsten Qualitätswert zugeordnete Teileinheit auszuwählen.

3. Verfahren nach Anspruch 1 oder 2, das enthält, dass, wenn die minimale Anzahl mindestens gleich zwei ist, für jede Teileinheit der Erhalt der Metrik enthält:

- für jedes Endgerät der Gruppe: für jedes mögliche Paar von Gateways der Teileinheit, zwischen der dem Endgerät und einem ersten Gateway des Paars zugeordneten Qualitätsinformation und der dem Endgerät und einem zweiten Gateway des Paars zugeordneten Qualitätsinformation einen Absolutwert einer Differenz zu berechnen, Absolutdifferenz genannt; und das Endgerät einem Wert zuzuordnen, minimale Absolutdifferenz genannt, der dem minimalen Wert der so berechneten Absolutdifferenzen entspricht;
- den minimalen Wert der minimalen Absolutdifferenzen unter den den Endgeräten der Gruppe von Endgeräten zugeordneten minimalen Absolutdifferenzen zu suchen; und
- den Wert der der Teileinheit zugeordneten Metrik auf den gefundenen minimalen Wert der minimalen Absolutdifferenzen festzulegen;

wobei die dem Wert der höchsten Metrik zugeordnete Teileinheit ausgewählt wird, wenn der Wert der Metrik mindestens gleich einer vordefinierten Schwelle ist.

4. Verfahren nach einem der vorhergehenden Ansprüche, das enthält, dass die Auswahlprozedur iterativ ist und so lange wiederholt wird, wie keine Teileinheit ausgewählt ist, wobei eine Teilgruppe von Endgeräten aus der Gruppe von Endgeräten der vorhergehenden Iteration bei jeder auf die erste Iteration folgenden neuen Iteration gelöscht wird.

5. Verfahren nach Anspruch 4, das enthält, dass jedes Endgerät der Teilgruppe von Endgeräten unter den Endgeräten der Gruppe von Endgeräten der vorhergehenden Iteration ausgewählt wird, die die schlechtesten Kommunikationsqualitäten mit den Gateways der Einheit von Gateways haben.

6. Verfahren nach einem der vorhergehenden Ansprüche, das enthält, dass das drahtlose und einen geringen Energieverbrauch erlaubende Weitverkehrsnetz ein LoRa-Netz ist und das für das Netz geeignete Kommunikationsprotokoll das LoRaWAN-Protokoll ist.

7. Verfahren zur Übertragung von Daten von einem Server an eine Gruppe von Endgeräten, wobei jedes Endgerät der Gruppe mit dem Server über mindestens ein Gateway einer Einheit von Gateways kommuniziert, wobei die Gruppe von Endgeräten und die Einheit von Gateways ein drahtloses Weitverkehrsnetz bilden und einen geringen Energieverbrauch erlauben, wobei jedes für mindestens ein Endgerät bestimmte Daten empfangende Gateway die Daten an jedes Endgerät, für das die Daten bestimmt sind, in einem Rahmen entsprechend einem für das Netz geeigneten Kommunikationsprotokoll überträgt, wobei das Verfahren enthält:

- die an eine Gruppe von Endgeräten zu übertragenden Daten zu erhalten (31);
- (32) eine Teileinheit von Gateways der Einheit von Gateways zu erhalten (32), um die Daten an die Gruppe von Endgeräten weiterzuleiten, wobei die Teileinheit durch Ausführung des Verfahrens nach einem der Ansprüche 1 bis 6 erhalten wird; und
- die Daten an die Endgeräte der Gruppe von Endgeräten über jedes Gateway der Teileinheit von Gateways zu übertragen (33).

8. Vorrichtung zur Auswahl mindestens eines Gateways in einer Einheit von Gateways (12A, 12B, 12C, 12D), um von einem Server empfangene und für jedes Endgerät einer Gruppe von Endgeräten (14A, 14B, 14C, 14D, 14E, 14F, 14G, 14H) bestimmte Daten weiterzuleiten, wobei jedes Endgerät der Gruppe mit dem Server über mindestens ein Gateway einer Einheit von Gateways kommuniziert, wobei die Gruppe von Endgeräten und die Einheit von Gateways ein drahtloses Weitverkehrsnetz bilden und einen geringen Energieverbrauch erlauben, wobei jedes Gateway, das für mindestens ein Endgerät bestimmte Daten empfängt, die Daten in einem Rahmen entsprechend einem für das Netz geeigneten Kommunikationsprotokoll an jedes Endgerät überträgt, für das die Daten bestimmt sind, **dadurch gekennzeichnet, dass** die Vorrichtung enthält:

- Erhalteinrichtungen, um für jedes von einem Endgerät der Gruppe und einem möglichen Gateway der Einheit von Gateways gebildete Paar eine Information zu erhalten, Qualitätsinformation genannt, die für eine Kommunikationsqualität zwischen dem Endgerät und dem Gateway repräsentativ ist;
- Sucheinrichtungen, um mindestens eine Teileinheit von Gateways der Einheit von Gateways zu suchen, die in Kombination dem Server erlauben, mit jedem Endgerät der Gruppe zu kommunizieren, wobei jede Teileinheit eine minimale Anzahl von Gateways enthält, minimale Anzahl genannt, die notwendig ist, damit der Server mit jedem Endgerät der Gruppe kommunizieren kann;
- Bestimmungseinrichtungen, um die dem Wert der höchsten Metrik zugeordnete Teileinheit zu bestimmen; und
- Auswahleinrichtungen, um die bestimmte Teileinheit auszuwählen, wenn der höchste Wert der Metrik mindestens gleich einer vordefinierten Schwelle ist.

**9.** Ausrüstung von der Art Server, die geeignet ist, über eine Einheit von Gateways mit einer Gruppe von Endgeräten zu kommunizieren, wobei die Gruppe von Endgeräten und die Einheit von Gateways ein drahtloses Weitverkehrsnetz bilden und einen geringen Energieverbrauch erlauben, wobei jedes Gateway, das für mindestens ein Endgerät bestimmte Daten empfängt, die Daten in einem Rahmen entsprechend einem für das Netz geeigneten Kommunikationsprotokoll an jedes Endgerät überträgt, für das die Daten bestimmt sind, wobei die Ausrüstung enthält:

- Erhalteinrichtungen, um an die Gruppe von Endgeräten zu übertragende Daten zu erhalten;
- eine Auswahlvorrichtung mindestens eines Gateways in der Einheit von Gateways nach Anspruch 8; und
- Übertragungseinrichtungen, um die Daten über jedes ausgewählte Gateway an die Endgeräte der Gruppe von Endgeräten zu übertragen.

**10.** Computerprogramm, das Anweisungen enthält, um das Verfahren nach einem der Ansprüche 1 bis 7 durch eine Vorrichtung (110) durchzuführen, wenn das Programm von einem Prozessor der Vorrichtung ausgeführt wird.

**11.** Speichereinrichtungen, die das Speichern eines Computerprogramms enthalten, das Anweisungen enthält, um das Verfahren nach einem der Ansprüche 1 bis 7 durch eine Vorrichtung (110) durchzuführen, wenn das Programm von einem Prozessor der Vorrichtung ausgeführt wird.

**Claims**

**1.** Method for selecting at least one gateway in a set of gateways (12A, 12B, 12C, 12D) for relaying data received from a server and intended for each endpoint in a group of endpoints (14A, 14B, 14C, 14D, 14E, 14F, 14G, 14H), each endpoint in said group communicating with the server via at least one gateway in the set of gateways, the group of endpoints and the set of gateways forming a long-range wireless network affording low energy consumption, each gateway receiving data intended for at least one endpoint retransmitting said data to each endpoint for which said data are intended in a frame in accordance with a communication protocol adapted to said network, **characterised in that** the method comprises a selection procedure comprising:

- obtaining (320), for each pair formed by an endpoint in said group and a gateway in the possible set of gateways, information, referred to as quality information, representing a quality of communication between said endpoint and said gateway;
- seeking (321) at least one subset of gateways in the set of gateways which, in combination, enable the server to communicate with each endpoint in said group, each subset comprising a minimum number of gateways, referred to as the minimum number, necessary for the server to be able to communicate with each endpoint in said group;

for each subset found, obtaining (322), from the quality information, a value of a metric representing a risk of the data sent by the server and relayed by each gateway in said subset being lost because of collisions between frames relaying said data sent by the gateways in said subset; and

selecting (323) a subset according to the values of metrics obtained.

**2.** Method according to claim 1, wherein, if at least one gateway in the set of gateways by itself alone enables the server to communicate with each endpoint in said group, the minimum number is equal to unity and, for each gateway enabling the server to communicate with each endpoint in said group, the method comprises:

- forming a subset containing said gateway; and
- associating said subset with the lowest value among the values of the quality information associated with the gateway in said subset; and
- selecting the subset associated with the highest quality value.

**3.** Method according to claim 1 or 2, wherein, when the minimum number is equal to at least two, for each subset, obtaining the metric comprises:

- for each endpoint in said group : for each possible pair of gateways in said subset, calculating an absolute value of a difference, referred to as the absolute difference, between the quality information associated with said terminal and with a first gateway in the pair and the quality information associated with said terminal and with a second gateway in the pair; and associating said terminal with a value, referred to as the minimum absolute difference, corresponding to the minimum value of the absolute differences thus calculated;
- seeking the minimum value of the minimum absolute differences among the minimum absolute differences associated with the endpoints in the group of endpoints; and
- fixing the value of the metric associated with said subset at the minimum value of the minimum absolute differences found;

the subset associated with the value of the highest metric being selected when the value of the metric is equal to at least a predefined threshold.

4. Method according to any one of the preceding claims, wherein the selection procedure is iterative and is reiterated as long as no subset is selected, a sub-group of endpoints being eliminated from the group of terminals of the previous iteration at each new iteration following the first iteration.

5. Method according to claim 4, wherein each endpoint in the sub-group of endpoints is selected from the endpoints in the group of endpoints of the previous iteration having the poorest qualities of communication with the gateways in the set of gateways.

6. Method according to any one of the preceding claims, wherein the long-range wireless network affording low energy consumption is a LoRa network and the communication protocol adapted to said network is the LoRaWAN protocol.

7. Method for transmitting data from a server to a group of endpoints, each endpoint in said group communicating with the server via at least one gateway in a set of gateways, the group of endpoints and the set of gateways forming a long-range wireless network affording low energy consumption, each gateway receiving data intended for at least one endpoint retransmitting said data to each endpoint for which said data are intended in a frame in accordance with a communication protocol adapted to said network, the method comprising:

 - obtaining (31) data to be transmitted to a group of endpoints;
 - obtaining (32) a subset of gateways in the set of gateways for relaying said data to the group of endpoints, said subset being obtained by implementing the method according to any one of claims 1 to 6; and
 - transmitting (33) said data to the endpoints in the group of endpoints via each gateway in the subset of gateways.

8. Device for selecting at least one gateway in a set of gateways (12A, 12B, 12C, 12D) for relaying data received from a server and intended for each endpoint in a group of endpoints (14A, 14B, 14C, 14D, 14E, 14F, 14G, 14H), each endpoint in said group communicating with the server via at least one gateway in a set of gateways, the group of endpoints and the set of gateways forming a long-range wireless network affording low energy consumption, each gateway receiving data intended for at least one endpoint retransmitting said data to each endpoint for which said data are intended in a frame in accordance with a communication protocol adapted to said network, **characterised in that** the device comprises:

 - obtaining means for obtaining, for each pair formed by an endpoint in said group and a gateway in the possible set of gateways, information, referred to as quality information, representing a quality of communication between said endpoint and said gateway;
 - seeking means for seeking at least one subset of gateways in the set of gateways which, in combination, enable the server to communicate with each endpoint in said group, each subset comprising a minimum number of gateways commonly referred to as the minimum number, necessary for the server to be able to communicate with each endpoint in said group;
 - determination means for determining the subset associated with the highest metric value; and
 - selection means for selecting the subset determined if the value of the highest metric is at least equal to a predefined threshold.

9. Equipment of the server type adapted for communicating with a group of endpoints via a set of gateways, the group of endpoints and the set of gateways forming a long-range wireless network affording low energy consumption, each gateway receiving data intended for at least one endpoint retransmitting said data to each endpoint for which said data are intended in a frame in accordance with a communication protocol adapted to said network, the equipment comprising:.

 - obtaining means for obtaining data to be transmitted to the group of endpoints;
 - a device for selecting at least one gateway in the set of gateways according to claim 8; and
 - transmission means for transmitting said data to the endpoints in the group of endpoints via each selected gateway.

10. Computer program, comprising instructions for implementing, by a device (110), the method according to any one of claims 1 to 7, when said program is executed by a processor of said device.

11. Storage means, including computer program storage comprising instructions for implementing, by a device (110), the method according to any one of claims 1 to 7, when said program is executed by a processor of said device.

[Fig. 1]

[Fig. 2]

[Fig. 3]

[Fig. 4]

[Fig. 5]

```
                    ┌─────────────────────────┐
                    │    Obtenir table RSSI    │⌐ 3200
                    └────────────┬────────────┘
                                 │
                    ┌────────────┴────────────┐
         ┌─────────▶│           n=1           │⌐ 3201
         │          └────────────┬────────────┘
         │                       │
         │         ┌─────────────┴─────────────┐
         │    ┌───▶│       Solution à n         │⌐ 3202
         │    │    │    passerelle(s) existe?   │──── oui ───┐
         │    │    └─────────────┬─────────────┘            │
         │    │                  │ non                       │
         │    │       ┌──────────┴──────────┐     ┌─────────┴─────────┐
         │    │       │        n=n+1         │⌐ 3207│      Choix        │⌐ 3203
         │    │       └──────────┬──────────┘     │   passerelle(s)   │
         │    │                  │                 └─────────┬─────────┘
         │    │  oui ┌───────────┴──────────┐                │
    ┌────┴──────────┐│        n ≤ N ?        │⌐ 3208           │
    │  Suppression  │└───────────┬──────────┘                 │
    │   terminaux   │⌐ 3209      │ non                         │
    └───────┬───────┘            │                            │
            │                    │                  ┌─────────┴─────────┐
            │       non          │                  │  Δ^max_RSSI  ≥     │⌐ 3205
            └────────────────────┴──────────────────│   Th_Δ_RSSI ?     │
                                                     └─────────┬─────────┘
                                                               │ oui
                                                     ┌─────────┴─────────┐
                                                     │    Sélection      │⌐ 3206
                                                     └───────────────────┘
```

**EP 3 967 006 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3073109

### Littérature non-brevet citée dans la description

- *LoRaWAN 1.1 Spécification,* 11 Octobre 2017
- *LoRaWAN Remote Multicast Setup Spécification, final release, Version 1.0.0,* 10 Septembre 2018